# EUROPÄISCHE PATENTSCHRIFT

(11) **EP 2 581 312 B1**
(45) Veröffentlichungstag und Bekanntmachung des Hinweises auf die Patenterteilung: **18.11.2015**
(21) Anmeldenummer: 12186056.3
(22) Anmeldetag: 26.09.2012
(51) Int. Cl.: B64F 1/32

(54) **Containertransporter**
Container transporter
Transporteur de conteneur

(30) Priorität: 13.10.2011 DE 102011115924
(43) Veröffentlichungstag der Anmeldung: 17.04.2013
(73) Patentinhaber: MULAG Fahrzeugwerk, 77728 Oppenau (DE)
(72) Erfinder: Ebert, Martin, 77704 Oberkirch-Bottenau (DE); Verbücheln, Karl-Josef, 77871 Renchen-Ulm (DE); Spijker, R.P.M., 2132AL Hoofddorp (NL)
(74) Vertreter: Weickmann & Weickmann

(56) Entgegenhaltungen:
- EP-A2- 2 390 185
- DE-A1- 3 821 246
- US-A- 3 655 075

## Beschreibung

### I. Anwendungsgebiet

Die Erfindung betrifft sogenannte Containertransporter, wie sie auf dem Vorfeld eines Flughafens benutzt werden.

### II. Technischer Hintergrund

Diese Containertransporter werden benötigt, um das meist in Containern, manchmal auch auf Paletten, angeordnete Ladegut in und aus einem Flugzeug zu bringen.

Beim Entladen eines Flugzeuges wird direkt neben dem Flugzeug für den gesamten Entladevorgang einmalig ein so genannter Highloader positioniert, der eine Lade-Plattform hat, die z. B. mittels eines Scherengestänges auf die Höhe der Ladeluke des Flugzeuges ausgefahren werden kann, sodass ein Container aus dem Flugzeug - oft manuell mittels Anschieben - auf den Highloader verbracht werden kann.

Anschließend senkt sich die Ladeplattform des Highloaders ab bis knapp über den Boden, nämlich auf die Übergabehöhe eines herangefahrenen Containertransporters, dessen Ladefläche in seiner Höhe nur geringfügig veränderbar ist, der jedoch auf dem Vorfeld verfahren wird.

Auch hier erfolgt die Übergabe manuell durch Hinüberschieben vom Highloader auf den Containertransporter.

Anschließend fährt dieser mit dem aufgesattelten Container - meist nur eine kurze Strecke - an einen sogenannten Dolly - einen von mehreren Anhängern hinter einem Vorfeldschlepper - heran, der in der Nähe parkt.

Nun erfolgt wiederum durch manuelles Hinüberschieben die Übergabe des Containers auf den Dolly, bis alle Dollies dieses Transportzuges beladen sind, wofür häufig auch eine bestimmte Reihenfolge der entladenen Container eingehalten werden muss.

Theoretisch könnte auch der Highloader nach Übernahme des Containers und Absenken direkt zum Dolly fahren - und umgekehrt - und die Übergabe bewirken.

Dies ist jedoch nicht gewünscht, da der Highloader pro Ladevorgang einmalig genau am Flugzeug positioniert werden muss und nicht ständig bewegt werden soll, da hierdurch die Gefahr der Beschädigung des Flugzeuges relativ groß wäre.

Auch das Heranfahren der Dollies direkt an den Highloader ist keine Alternative, da die Dollies nicht einzeln, sondern in Form eines langen Transportzuges über Deichseln miteinander verbunden sind und daher einzeln nicht ausreichend positionsgenau an den Highloader herangefahren werden können.

Zusätzlich müsste der Transportzug wegen einer gewünschten endgültigen Reihenfolge der Container auf dem Transportzug dabei noch fast jedes Mal rangieren, was einen zu hohen Zeitaufwand ergeben würde.

Deshalb wird fast ausnahmslos die oben beschriebene Lösung mittels zwischengeschaltetem Containertransporter verwendet, der bei kurzen Entfernungen sogar den Container aufgesattelt bis in die Ladehalle verbringt.

Beim Beladen läuft der Vorgang genau umgekehrt ab.

Nachteilig bei der beschriebenen Vorgehensweise ist, dass die Übergabe an und vom Containertransporter - dessen Ladefläche ebenso wie die des Highloaders und der Dollies Transport-Rollen aufweist, auf denen die Container leicht abrollen, die beim Containertransporter und bei Highloader jedoch antreibbar sind - die Container manuell hinüber geschoben werden müssen, was bei einem Gewicht bis ca. 7 t auch für zwei Mann Personal eine anstrengende Tätigkeit ist.

Hinzu kommt, dass die Container - die von der Grundfläche her nicht quadratisch, sondern länglich sind und zusätzlich auf einer Seite einen Überhang, aufweisen - auf den Dollies mit dem Überhang nach hinten ausgerichtet stehen sollen. Im Flugzeug dagegen müssen sie wegen optimaler Ausnutzung des Laderaumes mit diesem Überhang gerade zur Seite weisend eingebracht werden.

Folglich müssen die Container auf ihrem Weg in das Flugzeug einmal um 90° um ihre Hochachse gedreht werden, was derzeit mit Hilfe des Highloaders durchgeführt wird, dort jedoch dessen Ladezeit für jeden Container verlängert.

In diesem Zusammenhang ist es aus dem US-Patent 3,655,075 bereits bekannt, dass zum Übernehmen von Containern der Containertransporter eine angetriebene Kontaktrolle aufweist, mit der er eine der nicht angetriebenen Transportrollen des Dollies antreibt, und dadurch eine Übernahme des Containers vom Dolly automatisch durchgeführt wird.

Hierfür sind jedoch spezifische Ausbildungen der Dollies notwendig, beispielsweise untereinander wirkverbundene Transportrollen im Dolly.

Ferner ist es aus der deutschen Patentanmeldung DE 3821246 A1 bekannt, die Übernahme von Paletten von einem Palettenwagen auf eine Rampe und umgekehrt zu automatisieren, indem aus der Rampe Übernahmevorrichtungen mit angetriebenen Rollen ausfahrbar sind, die in entsprechende Ausnehmungen des davor stehenden Palettenwagens hineinragen können und auf diese Art und Weise die darauf stehende Palette automatisch auf die Rampe herüberziehen.

Auch hierfür sind spezifische Ausgestaltungen am Palettenwagen notwendig, die mit den Ausgestaltungen der Rampe zusammenpassen.

Das Problem besteht jedoch darin, dass auf dem Flughafen-Vorfeld je nach Flughafen-Betreiber unterschiedliche Dollies von meist unterschiedlichen Herstellern benutzt werden.

### III. Darstellung der Erfindung

### a) Technische Aufgabe

Es ist daher die Aufgabe gemäß der Erfindung, einen Containertransporter und ein Verfahren zu seinem Betrieb zur Verfügung zu stellen, welcher die angegebenen Nachteile nicht aufweist, und der insbesondere mit allen handelsüblichen Dollies, deren Transportrollen nicht angetrieben sind, zusammenwirken kann.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Durch eine Übernahmevorrichtung im Containertransporter, die auch einen Übernahmeantrieb besitzt, kann ein außerhalb der Ladefläche des Containertransporters stehendes Ladegut auf den Containertransporter mit Hilfe dieses Übernahmeantriebes herüber bewegt, also geschoben oder gezogen, werden.

Je nach spezifischer Ausgestaltung dieser Übernahmevorrichtung müssen dafür jeweils unterschiedliche Randbedingungen erfüllt sein, beispielsweise generell sich das zu übernehmende Ladegut etwa auf gleicher Höhe wie die Ladefläche des Containertransporters befinden, oder das Transportfahrzeug, von dem das Ladegut übernommen werden soll, muss nah genug am Containertransporter positioniert und spezifisch gestaltet sein, beispielsweise Durchbrüche, Kopplungselemente oder ähnliches an den richtigen Stellen aufweisen, worauf im folgenden noch näher eingegangen wird.

Die Übernahmevorrichtung wird dabei in eine aktivierte Stellung aus dem Containertransporter seitlich herausgefahren - eben aus derjenigen Seite, von der her die Übernahme des Transportgutes erfolgen soll, was bei einem Containertransporter mit nur einer Seitenwand die restlichen drei Seiten sein können - während die Übernahmevorrichtung in ihrer deaktivierten Stellung innerhalb der Grundfläche des restlichen Containertransporters liegt. Dementsprechend kann die Übernahmevorrichtung maximal drei Mal, also einmal für jede freie Seite, im Containertransporter vorhanden sein.

Eine solche Übernahmevorrichtung bewegt das zu übernehmende Ladegut im aktivierten Zustand mittels einer angetriebenen, an einer Dollyrolle oder am Ladegut anliegenden, Übernahmerolle mittels Reibschluss, die dann das Ladegut in Richtung Containertransporter bewegt. Die Übernahmerolle kann sich dabei am freien Ende eines Übernahmearmes befinden, der unter dem Containertransporter heraus ausfahrbar ist. Die Übernahmerolle ist dabei drehend antreibbar von einem Übernahmeantrieb aus, entweder direkt oder über zwischengeordnete Elemente wie ein Zwischenrad. Die Antriebsrichtung der Übernahmerolle kann gewählt werden, was notwendig ist, da die Übernahmerolle sowohl an einer Dollyrolle unter dem Container, als auch direkt am Boden des Containers angreifen kann, denn hierfür sind unterschiedliche Antriebsrichtungen notwendig.

Ein Angreifen direkt an der Unterseite des Containers ist jedoch nur bei solchen Dollies möglich, bei denen in der Ladefläche des Dollys ausreichend große Durchbrüche vorhanden sind.

Im Regelfall wird die Übernahmerolle eine oder mehrere Dollyrollen kontaktieren und über Reibschluss antreiben. Nur falls dies nicht möglich ist wegen z.B. eines zu großen Abstandes der Dollyrollen von dem Containertransporter, wird alternativ ein Kontaktieren des Containers selbst über Durchbrüche im Boden des Dolly durchgeführt.

Damit die Übernahmevorrichtung eingesetzt werden kann, muss sich der Dolly mit dem übernehmenden Container in einer definierten Relativlage - sowohl längs als auch quer zur Übernahmerichtung des Containers - zum Containertransporter befinden.

Eine Feinpositionierung in Übernahmerichtung kann beispielsweise erreicht werden, indem die Übernahmevorrichtung nicht nur eine sondern in Übernahmerichtung mehrere beabstandete Übernahmerollen aufweist und deren Abstand bevorzugt etwas größer oder kleiner als der Abstand derjenigen Dollyrollen ist, an denen die Übernahmerollen kontaktierend angreifen sollen.

Durch das Heranfahren der Übernahmerollen von unten an die entsprechenden Dollyrollen wird eine entsprechende Positionierung in Übernahmerichtung vollzogen, die entweder in einem Bewegen des Dollies oder auch in einem mehr oder minder starken Ausfahren des Übernahmearmes, an dem sich die Antriebsrollen befinden, realisiert wird.

Auch eine Positionierung quer zur Übernahmerichtung ist notwendig:
Hierzu kann der Containertransporter ein oder auch mehrere, dann z. B. auf unterschiedliche Bauarten von Dollies abgestimmte, Sensoren, insbesondere Kontaktelemente, aufweisen, die ein Signal - auch in Form eines mechanischen Kontaktes - geben, wenn sich der Dolly relativ zum Containertransporter in der richtigen Position befindet.

Eine andere Möglichkeit besteht darin, dass der Übernahmearm um eine Hochachse verschwenkbar oder quer zur Übernahmerichtung verfahrbar ist und der Übernahmearm vorzugsweise Positionierelemente, insbesondere kontaktierende Positionierelemente, aufweist, die eine Zentrierung gegenüber vorgegebenen Bauteilen des Dollies, beispielsweise Längs- oder Querstreben des Bodens des Dollies, aufweist.

Ebenso kann der Übernahmearm einen Sensor enthalten, der die erreichte Höhe der Übergaberolle detektiert. Denn beim Angreifen an einer Dollyrolle ist die Kontaktierungshöhe niedriger als beim Angreifen direkt an der Unterseite des Containers. Deshalb kann abhängig von der detektierten Höhe im kontaktierenden Zustand und davon abhängig die notwendige Antriebsrichtung der Übernahmerolle automatisch gewählt werden.

In allen Fällen genügt es, wenn von der Übernahmevorrichtung das Ladegut nicht vollständig, sondern nur bis zum Kontakt mit den ersten angetriebenen Transportrollen (Längsrichtung) oder Transportbänder (Querrichtung) auf der Ladefläche des Containertransporters auf diesen aufgeschoben wird, denn ab diesem Zustand ergreifen diese angetriebenen Transportrollen oder Transportbänder das Ladegut und ziehen es vollständig auf den Container-transporter herüber.

### Verfahren:

Aus den vorstehenden Darlegungen wird klar, dass - ganz unabhängig von der jeweiligen körperlichen Ausgestaltung - zum automatischen Verbringen des Ladegutes von einem benachbarten Transportfahrzeug auf den Containertransporter prinzipiell eine Übernahmevorrichtung des Containertransporters seitlich aus diesem ausgefahren und entweder das Ladegut direkt oder eine im Transportfahrzeug angeordnete Dollyrolle dadurch in Bewegung versetzt wird, sei es kraftschlüssig oder formschlüssig, und hierdurch das Ladegut zumindest teilweise und bis zum Kontakt mit den angetriebenen Transportrollen oder Transportbändern des Containertransporters auf diesen verschoben wird.

Dabei kann durch mehr oder minder starkes Ausfahren des Übernahmearmes und/oder Verschwenken um eine Hochachse und/oder seitliches Verfahren quer zur Übernahmerichtung des Transportarmes eine Feinpositionierung des Übernahmearmes und damit der Übernahmerolle gegenüber dem zu erreichenden Gegenelement - Dollyrolle oder Durchbruch im Boden des Dollies - erreicht werden.

Auch eine automatische Wahl der Antriebsrichtung der Übergaberolle kann erreicht werden, z. B. mittels Detektierung der Höhe der Übernahmerolle im kontaktierenden Zustand, die beim Anliegen an dem Boden des Containers höher ist als beim Anliegen an einer Dollyrolle im Dolly.

### c) Ausführungsbeispiele

Ausführungsformen gemäß der Erfindung sind im Folgenden beispielhaft näher beschrieben. Es zeigen:
- Fig. **1:**: die Ausgangssituation,
- Fig. **2a - c:**: das Herüberziehen des Ladegutes mit einem kraftschlüssig wirkenden Kontaktelement von der Unterseite des Ladegutes her mit einer ersten Übernahmevorrichtung,
- Fig. **3a, b:**: Detaildarstellungen zu Figur **2****,** und
- Fig. **4a - c:**: die Übernahmevorrichtung in einer zweiten Version.

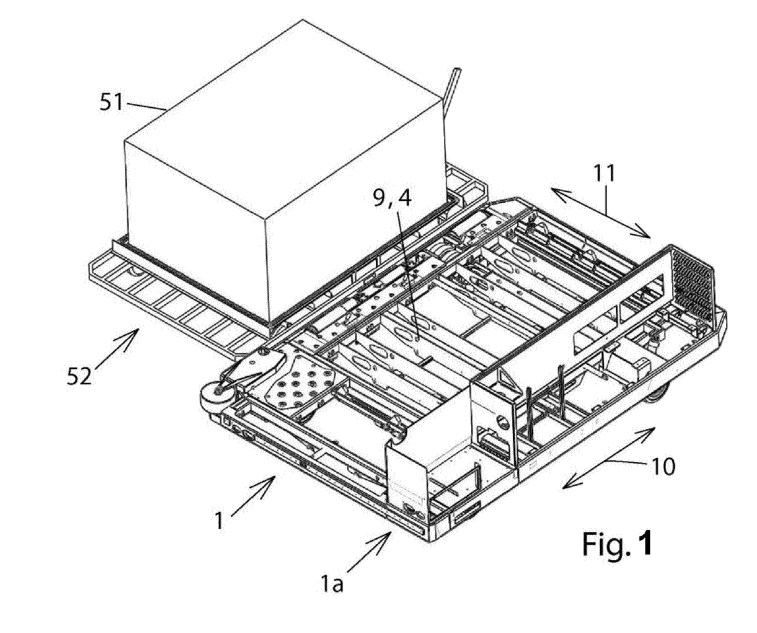

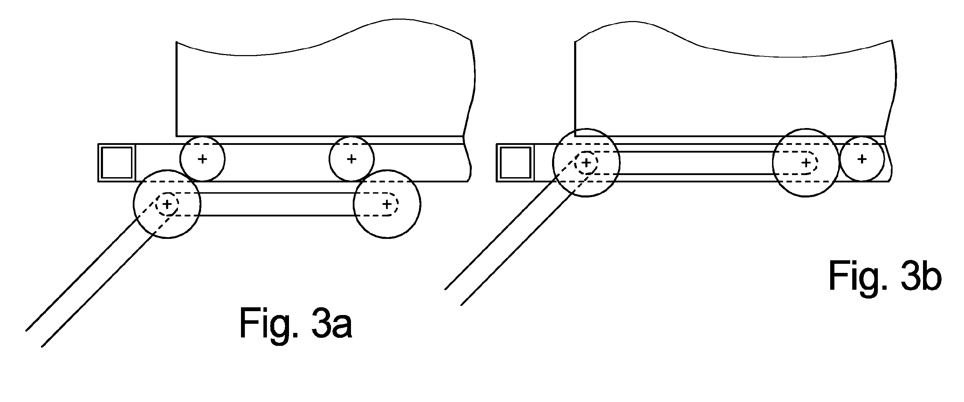

**Figur 1** zeigt das grundlegende Problem:
Auf einem Transportfahrzeug **52,** einem so genannten Dolly, steht ein Ladegut, in diesem Fall eine sogenannte Palette **51 -** im Gegensatz zu beispielsweise einem Container **50,** wie er etwa in **Figur 3a****, b** dargestellt ist - in Form eines rechteckigen Quaders, die in Querrichtung **11** auf die Ladefläche **3** des Containertransporters **1** hinüberbewegt werden soll.

Die Längsrichtung **10** des Containertransporters **1** wird durch die seitlich der Ladefläche **3** des Containertransporters aufragende Seitenwand **1a** definiert, die hier nur ansatzweise skizziert ist und in der sich normalerweise die hydraulischen, elektrischen und elektronischen Komponenten sowie der Antriebsmotor befinden.

Dieses Hinüberbewegen der Palette **51** wird bisher manuell durchgeführt, da in der Ladefläche **53** des Transportfahrzeuges **52** zwar Dolly-Rollen **56** vorhanden sind, auf denen das Ladegut **51** gut abrollen kann, jedoch diese Rollen über keinen Antrieb verfügen. Zum Hinüberschieben müssen sich Transportfahrzeug **52** und Containertransporter **1** hinsichtlich ihrer Ladeflächen **3, 53** etwa auf gleicher Höhe befinden, ggf. die Ladefläche **3** des Containertransporters **1** geringfügig tiefer liegen, aber dies kann unter Umständen durch eine begrenzte Höhenveränderbarkeit der Ladefläche **3** des Containertransporters **1** erreicht werden.

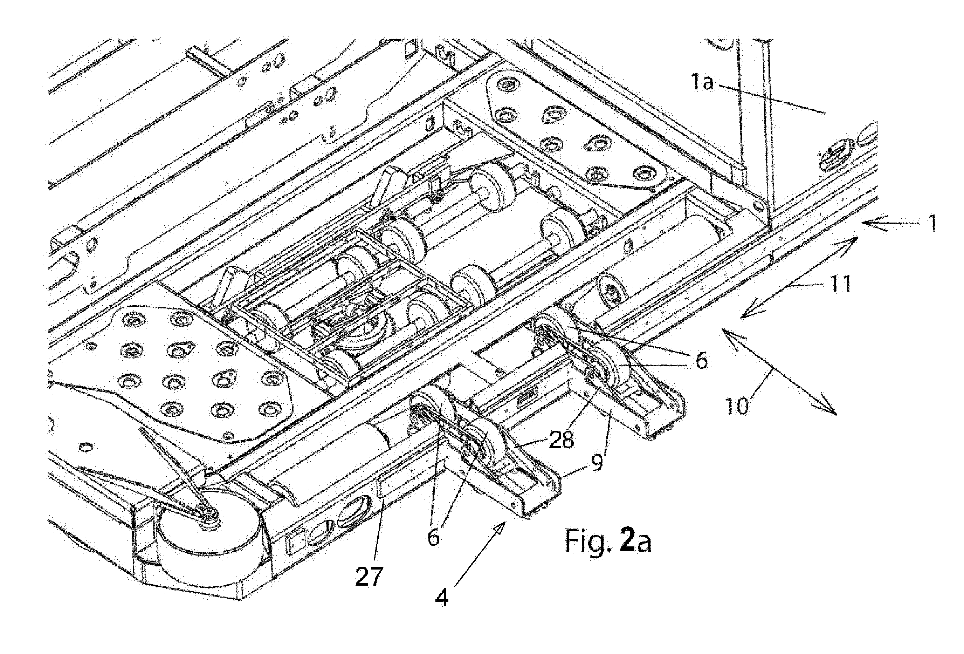

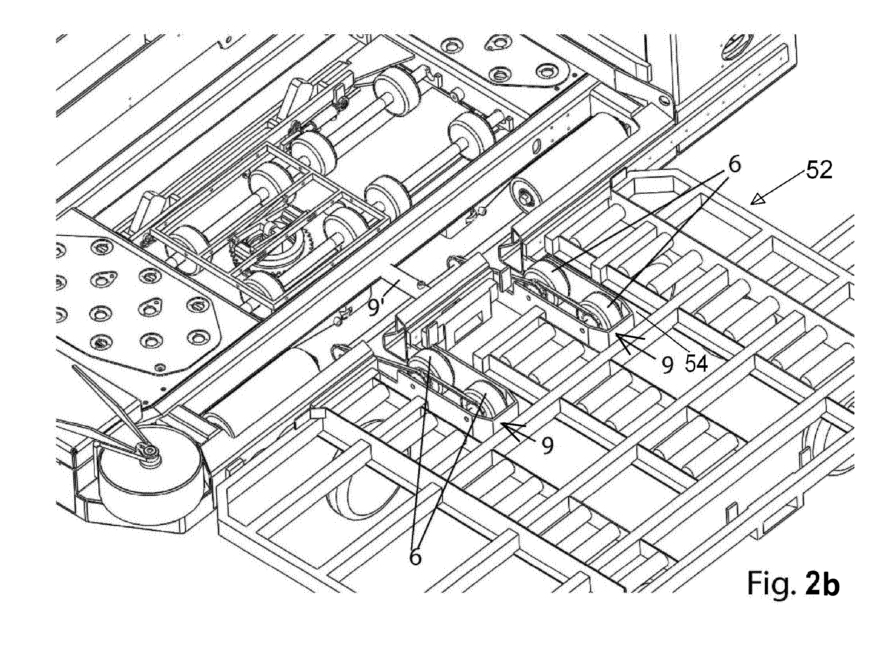

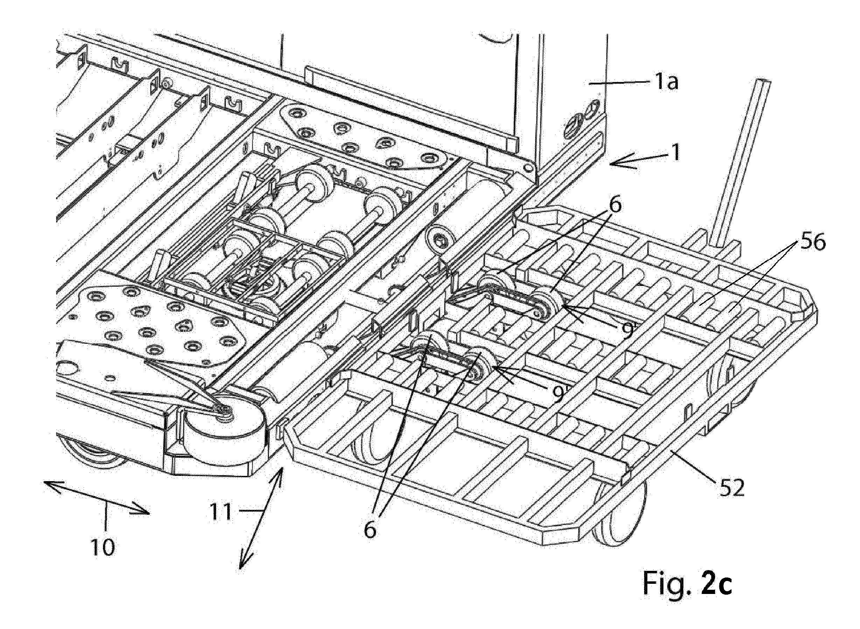

Die **Figuren 2****,** **3** **und** **4** zeigen kraftschlüssige, also mittels Reibschluss wirkende, Lösungen.

Dementsprechend wird das Transportfahrzeug **52,** auf dem sich das zu übernehmende - nicht dargestellte - Ladegut befindet, an einer freien Seite des Containertransporters **1** positioniert.

Bei den **Figuren 2a** **und b** besteht die Übernahmevorrichtung **4** aus zwei zueinander beabstandeten, in Längsrichtung **10** vorstehenden Übernahme-Armen **9,** in denen jeweils zwei antreibbare, verschwenkbare Übernahme-Rollen **6** angeordnet sind.

Diese können gegenüber dem Übernahme-Arm **9** mittels eines Hebelgestänges **28,** beispielsweise eines Parallelogramms, von der Ruhelage, in der sie sich unterhalb des Niveaus der Ladefläche **3** befinden, nach oben und außen geschwenkt werden, so dass sie den Boden eines auf dem Transportfahrzeug **52** ruhenden Ladegutes durch dort vorhandene Durchbrüche **54** kontaktieren und durch Antrieb dieser Übernahme-Rollen **6** auf den Containertransporter 1 schieben.

Das Hebelgestänge **28** besteht dabei aus einzelnen Hebeln, die an dem Übernahme-Arm **9** mit ihrem unteren Ende befestigt sind und von dort meist schräg nach oben ragen und mit ihrem oberen Ende mit einer der beiden in der gewünschten Übernahmerichtung hintereinander angeordneten Übernahmerollen **6** verbunden sind, die wiederum durch eine Querstrebe gekoppelt sind, was insgesamt ein Parallelogramm ergibt.

In der in **Figur 2a** dargestellten teilweise deaktivierten Lage weisen die beiden Arme des Hebelgestänges **28** von ihrem Befestigungspunkt am Übernahme-Arm **9** flach ansteigend nach innen in Richtung Containertransporter **1.** Dabei befindet sich die innerste der beiden Übernahme-Rollen **6** noch innerhalb des umlaufenden Rahmens des Containertransporters **1.**

Durch das Hochstellen der Arme des Hebelgestänges **28** bis in die Vertikale und darüber hinaus bezüglich des Containertransporters **1** nach außen weisend liegen sie dann in der in **Figur 2b** dargestellten aktivierten Stellung unter dem Boden des Ladegutes an, den sie natürlich bei aufrechter Stellung des Hebelgestänges **28** etwas anheben und der danach wieder etwas absinken kann, aber mit seinem Eigengewicht auf die in der Endlage durch Anschläge begrenzten Übernahme-Rollen **6** aufliegt und von diesen bewegt werden kann.

In Abwandlung dazu zeigt **Figur 2c** eine Lösung, bei der der Übernahme-Arm **9'** teleskopierbar ausgeführt ist und horizontal oder leicht nach oben ansteigend in das Transportfahrzeug **52** hinein verfahren wird bis zum Kontakt mit dem Boden des nicht dargestellten Ladegutes.

Die **Figuren 3a, b** zeigen die Übernahmevorrichtung **4** gemäß der **Figur 2c** in vergrößerter Darstellung im aktivierten Zustand:
Dabei ist in **Figur 3a** der bevorzugte Fall dargestellt, in dem die angetriebenen Übernahmerollen **6** jeweils an einer von zwei benachbarten Dollyrollen **56** anliegen und in eine solche Richtung antreiben, dass der darauf aufliegende z. B. Container **50** dadurch in Übernahmerichtung **33,** also in Richtung Containertransporter **1,** bewegt wird.

In **Figur 3a** besitzen zu diesem Zweck die beiden Übernahmerollen **6** nicht nur einen größeren Durchmesser, sondern auch einen etwas größeren Abstand in Übernahmerichtung **33** als die beiden Dollyrollen **56,** die sie kontaktierten. Der Abstand der Übernahmerollen **6** ist dabei maximal um den Durchmesser einer Übernahmerolle größer als der Abstand der beiden zu kontaktierenden Dollyrollen **56.** Dadurch ist beim Hochfahren eine Selbstzentrierung der Übernahmevorrichtung **4** gegenüber diesem Paar von Dolly-rollen **56** in Übernahmerichtung **33** möglich.

Nur in denjenigen Fällen **(****Fig. 3b****),** in denen der Dolly, also das Transportfahrzeuges **52,** auf der dem Containertransporter **1** zugewandten Seite keine Dollyrollen **56** im Greifbereich der Übernahmevorrichtung **4** besitzt, stattdessen aber ausreichend große Durchbrüche **54** in seinem Rahmen, wird die Übernahmevorrichtung von unten durch den Durchbruch **54** soweit hochgefahren, dass die beiden Übernahmerollen **6** reibschlüssig an der Unterseite des Ladegutes, z. B. des Containers **50,** angreifen und diesen durch entsprechende Drehung in Richtung Containertransporter bewegen können. Auch in diesem Fall müssen die beiden Übernahmerollen **6** natürlich in die gleiche Richtung drehend angetrieben werden.

Wie der Vergleich der **Figuren 3a und 3b** zeigt, befindet sich in diesen beiden Situationen die Übernahmevorrichtung **4** auch in einer unterschiedlichen Höhe gegenüber dem (in den Figuren **3a****,** b nicht mehr sichtbaren) restlichen Containertransporter **1,** was durch einen nicht dargestellten Sensor am Containertransporter **1** detektiert werden kann, der dann über eine Steuerung abhängig von der jeweils detektierten Situation, also Anliegen am Ladegut selbst oder an den Dollyrollen **56,** die Drehrichtung der Übernahmerollen **6** entsprechend veranlasst.

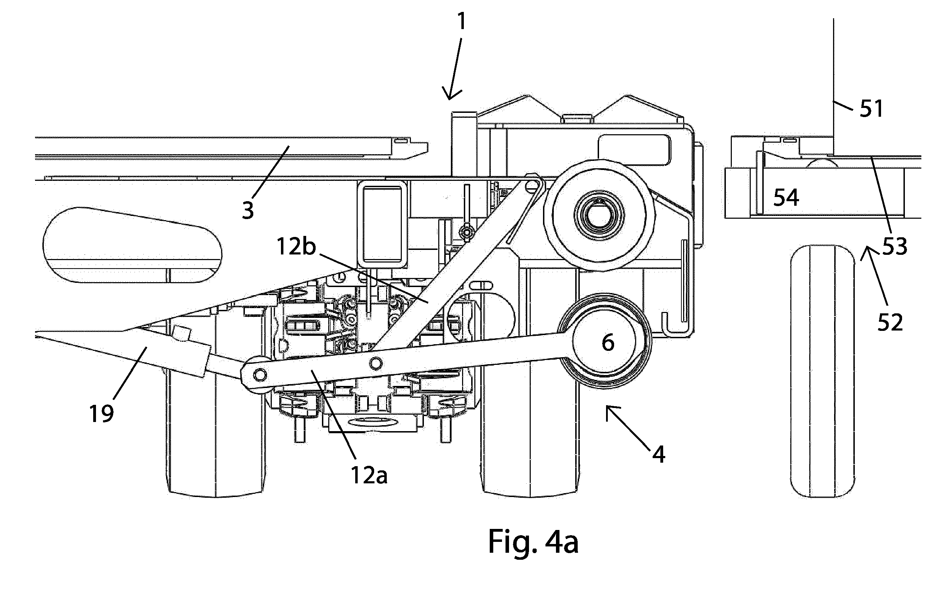

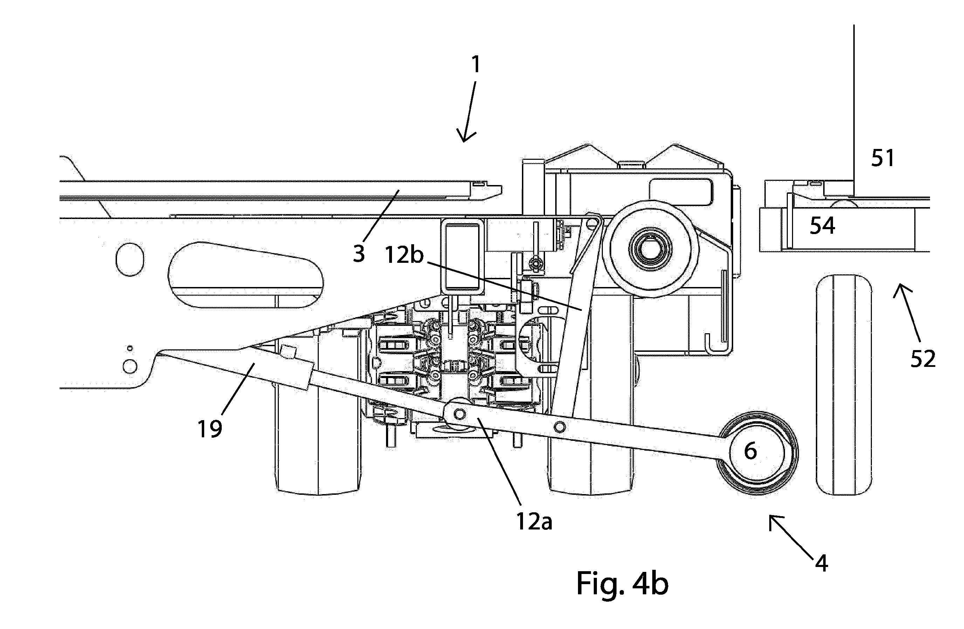

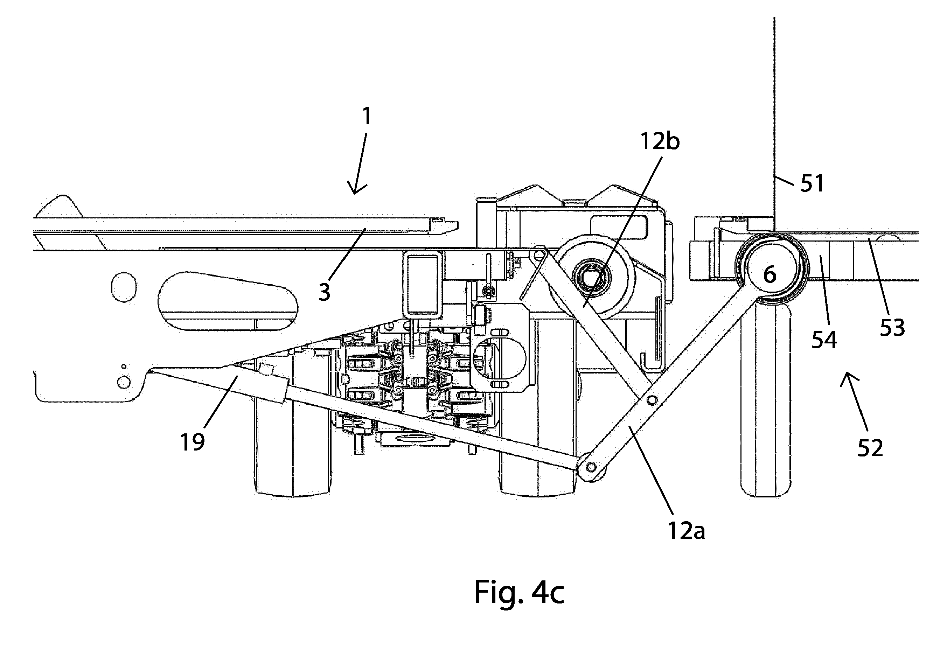

Während bei der Lösung der **Figuren 2** die Übernahme-Rollen **6** relativ klein vom Durchmesser her sind, so dass sie in ihrer deaktivierten Lage teilweise noch innerhalb des beispielsweise aus einem U-Profil bestehenden Übernahme-Armes **9** liegen können, ist bei der Lösung der Figuren **4** der Durchmesser dieser Übernahme-Rollen **6** größer und erreicht insbesondere das **1,5** fache bis **2,5** fache des Durchmessers einer Dolly-Rolle **56.**

Auch hier ist die Übernahme-Rolle **6,** von der hier nur eine von zwei quer zur Übernahmerichtung beabstandeten Rollen dargestellt ist, mittels eines Hebelgestänges **12** verschwenkbar zwischen einer deaktivierten Lage in **Figur 4a** unter dem Chassis des Containertransporters **1** und innerhalb dessen Grundfläche und einer aktivierten Lage gemäß **Figur 4c** anliegend an der Unterseite des Ladegutes, beispielsweise einer Palette **51,** durch entsprechende Durchbrüche **54** im Ladeboden **53** des Transportfahrzeuges **52.**

Zu diesem Zweck ist die antreibbare Übernahme-Rolle **6** am freien Ende eines Hebels **12a** befestigt, der unter der Ladefläche **3** verläuft und an dem in der Mitte ein zweiter Hebel **12b** gelenkig angreift, dessen anderes Ende an der Unterseite des Chassis vom äußeren Rand zurückversetzt schwenkbar am Containertransporter **1** befestigt ist.

Das andere freie Ende des Hebels **12a** des Hebelgestänges **12** ist mit einem Arbeitszylinder, etwa einem Hydraulikzylinder **19,** verbunden, der in der gewünschten Bewegungsrichtung für das Transportgut unter dem Chassis des Containertransporters **1** verläuft und bei seinem Ausfahren den Hebel **12a** in Richtung außerhalb der Grundfläche des Containertransporters **1** bewegt. Wegen des zunächst schräg nach innen unten und zum Schluss nach schräg außen unten weisenden zweiten Hebels **12b** durchläuft die Übernahme-Rolle **6** dabei einen wannenförmigen Weg von unter dem Container-transporter **1** bis unter das Transportfahrzeug **52.**

### BEZUGSZEICHENLISTE

- 1: Container-Transporter
- **1**a: Seitenwand
- **3**: Ladefläche
- 4: Übernahmevorrichtung
- 6: Übernahme-Rolle
- 9: Übernahme-Arm
- 10: Längsrichtung
- 11: Querrichtung
- 12: Hebelgestänge
- 12a, b: Hebel
- 19: Hydraulikzylinder
- 28: Hebelgestänge
- 33: Übernahmerichtung

- 50: Container
- 51: Palette

- 52: Transportfahrzeug
- 53: Ladefläche
- 54: Durchbrüche
- 56: Dolly-Rolle

## Patentansprüche

1. **Containertransporter (1)** mit
- einer in Längsrichtung **(10)** des Containertransporters **(1)** verlaufenden Seitenwand **(1a),**
- angetriebenen, nur in Längsrichtung **(10)** transportierenden Transportrollen, die aus einer Ladefläche **(3)** des Containertransporters **(1)** nach oben vorstehen, und
- einer Übernahmevorrichtung **(4)** zur Übernahme von auf einer mit Dolly-Rollen versehenen Ladefläche **(53)** eines Transportfahrzeugs **(52)** oder "Dollys" in etwa auf gleicher Höhe befindlichem Ladegut **(50, 51),** insbesondere einem Container **(50),** wobei
- die Übernahmevorrichtung **(4)** einen Übernahmearm **(9, 9'),** einen Übernahmeantrieb und mindestens eine durch den Übernahmeantrieb antreibbare und aus dem Bereich der Ladefläche (3) des Containertransporters **(1)** heraus in eine aktivierte Stellung verschwenkbare und ausfahrbare Übernahmerolle **(6)** umfasst,
- wobei die Übernahmevorrichtung **(4)** derart ausgebildet ist, dass die Übernahmerolle **(6)** entweder in der gewünschten Übernahmerichtung **(33)** für das Ladegut **(50, 51)** oder entgegen der gewünschten Übernahmerichtung **(33)** für das Ladegut **(50, 51)** drehend angetrieben wird, abhängig davon, ob die Übernahmerolle **(6)** in der aktivierten Stellung direkt am Boden des Ladegutes **(50, 51)** oder an einer der Dolly-Rollen **(56)** angreift.

2. Containertransporter (1) nach Anspruch 1, wobei der Übernahmearm **(9')** teleskopierbar ist.

3. Containertransporter **(1)** nach Anspruch 1, wobei die Übernahmerolle **(6)** mittels eines Hebelgestänges **(12, 28)** verschwenkbar und ausfahrbar ist.

4. Container-Transporter **(1)** nach einem der vorhergehenden Ansprüche, wobei die Übernahmerolle **(6)** von dem Übernahmeantrieb direkt oder mittels Zwischenelementen, insbesondere einem Zwischenrad, antreibbar ist.

5. Container-Transporter **(1)** nach einem der vorhergehenden Ansprüche, wobei die Übernahmevorrichtung **(4)** in Übernahmerichtung **(33)** des Ladegutes mehrere hintereinander liegende Übernahmerollen **(6)** aufweist, die zum Angreifen an jeweils einer Dolly-Rolle **(56)** angeordnet sind, aber insbesondere einen größeren oder kleineren Abstand als die Dolly-Rollen **(56)** zueinander besitzen und dadurch eine Zentrie
rung in Übernahmerichtung **(33)** an einem Paar von Dolly-Rollen **(56)** bewirkt wird.

6. Container-Transporter **(1)** nach einem der vorhergehenden Ansprüche, wobei die Übernahmevorrichtung **(4)** zwei quer zur Übernahmerichtung **(33)** beabstandete Übernahmearme **(9)** mit jeweils wenigstens einer Übernahmerolle **(6)** aufweist.

7. Container-Transporter **(1)** nach einem der vorhergehenden Ansprüche, wobei die Übernahmevorrichtung **(4)** eine Überwachungsvorrichtung umfasst, die das Anliegen der Übernahmerolle **(6)** an der Dolly-Rolle **(56)** oder der Unterseite des Containers **(50)** anzeigt.

8. Container-Transporter **(1)** nach einem der vorhergehenden Ansprüche, wobei in den nicht von der Seitenwand **(1a)** abgedeckten Seitenflächen des Containertransporters **(1)** formschlüssig wirkende Kontaktelemente, insbesondere quer zur Transportrichtung selbstzentrierende und/oder ausfahrbare Kontaktelemente **(25),** zum formschlüssigen Zusammenwirken mit dem zu kontaktierenden Transportfahrzeug **(52)** vorhanden sind.

9. Container-Transporter **(1)** nach einem der vorhergehenden Ansprüche, wobei der Containertransporter **(1)** mehrere, auf unterschiedliche Bauarten von Transportfahrzeugen **(52)** abgestimmte, Kontaktelemente aufweist und insbesondere der Containertransporter **(1)** wenigstens ein Anzeigeelement umfasst, welches das Anliegen und damit richtige Positionieren des Transportfahrzeuges (52) an dem entsprechenden Kontaktelement anzeigt.

10. Container-Transporter **(1)** nach einem der vorhergehenden Ansprüche, wobei die Übernahmevorrichtung **(4)** derart ausgebildet ist, dass abhängig von der erreichten Höhe der Übernahmerolle **(6)** in der aktivierten Stellung automatisch erkannt wird, ob die Übernahmerolle **(6)** eine Dolly-Rolle **(56)** oder den Boden eines Ladegutes (50, 51) kontaktiert.

11. **Verfahren** zum automatischen Herüberbewegen eines Ladegutes **(50, 51)** von einem benachbarten Transportfahrzeug **(52)** auf einen Containertransporter **(1)** nach einem der vorhergehenden Ansprüche, wobei
- die Übernahmerolle **(6)** seitlich aus dem Containertransporter **(1)** ausgefahren wird, bis sie den Boden des Ladegutes **(50,51)** auf dem Transportfahrzeug **(52)** oder wenigstens eine Dolly-Rolle **(56)** in der Ladefläche **(53)** des Transportfahrzeuges **(52)** kontaktiert,
- abhängig davon, ob die Übernahmerolle **(6)** direkt den Boden des Ladegutes **(50, 51)** oder eine der Dolly-Rollen **(56)** kontaktiert, die Antriebsrichtung der Übernahmerolle **(6)** gewählt wird, insbesondere automatisch gewählt wird, und
- durch die Drehung der Übernahmerolle **(6)** das Ladegut in Bewegung versetzt und auf den Containertransporter **(1)** verschoben wird.

12. Verfahren nach Anspruch 11, wobei
abhängig von der erreichten Höhe der Übernahmerolle **(6)** im kontaktierenden Zustand automatisch detektiert wird, ob die Übernahmerolle **(6)** eine Dolly-Rolle **(56)** oder den Boden eines Ladegutes **(50, 51)** kontaktiert.

## Claims

1. A container transporter (1) comprising:
- a side wall (1a) extending in a longitudinal direction (10) of the container transporter (1),
- driven transport rollers which only transport in the longitudinal direction (10) and which protrude upward from a loading surface (3) of the container transporter (1), and
- a transfer device (4) for transferring a piece of cargo (50, 51) arranged on a loading surface (53) of a transport vehicle (52) or a dolly arranged approximately at an identical elevation, wherein the loading surface is provided with dolly rollers and wherein the piece of cargo is in particular a container (50),
- wherein the transfer device (4) includes a transfer arm (9, 9'), a transfer drive and at least one transfer roller (6) that is drivable by the transfer drive and pivotable from the portion of the loading surface (3) of the container transporter (1) into an activated position, wherein
- wherein the transfer device (4) is configured so that the transfer roller (6) is driven in rotation either in the desired transfer direction (33) for the cargo (50, 51) or against the desired transfer direction (33) for the cargo (50, 51) depending on the transfer roller in the activated position directly engaging a base of the cargo item (50, 51) or one of the dolly rollers (56).

2. The container transporter (1) according to claim 1, wherein the transfer arm (9') is telescoping.

3. The container transporter (1) according to claim 1, wherein the transfer roller (6) is pivotable and extendable by a lever arrangement (12, 28).

4. The container transporter (1) according to one of the preceding claims, wherein the transfer roller (6) is drivable by the transfer drive directly or by intermediary elements, in particular an intermediary wheel.

5. The container transporter (1) according to one of the preceding claims, wherein the transfer device (4) includes plural transfer rollers (6) arranged behind one another in the transfer direction (33) of the cargo item, wherein the transfer rollers are arranged to engage a respective dolly roller (56) but in particular have a greater or smaller distance than the dolly rollers (56) from each other and thus cause a centering in the transfer direction (33) at a pair of dolly rollers (56).

6. The container transporter (1) according to one of the preceding claims, wherein the transfer device (4) includes two transfer arms (9) offset transversal to the transfer device (33) and respectively including at least one transfer roller (6).

7. The container transporter (1) according to one of the preceding claims, wherein the transfer device (4) includes a monitoring device which indicates a contact of the transfer roller (6) at the dolly roller (56) or at a bottom side of the container (50).

8. The container transporter (1) according to one of the preceding claims, wherein form locking contact elements are provided in side surfaces of the container transporter (1) which are not covered by the side wall (1a), wherein the contact elements (25) are in particular self-centering or deployable transversal to the transport direction for form locking engagement with the transport vehicle (52) that is to be contacted.

9. The container transporter (1) according to one of the preceding claims, further comprising plural contact elements which are adapted to different configurations of transport vehicles (52) and in particular their container transporter (1) includes at least one display element which indicates a contact and thus a correct positioning of the transport vehicle at the respective contact element.

10. The container transporter (1) according to one of the preceding claims, wherein the transfer device (4) is configured so that depending on an achieved level of the transfer roller (6) in the activated position it is automatically detected whether the transfer roller (6) contacts a dolly roller (56) or the bottom side of a cargo item (50, 51).

11. A method for automatically moving a cargo item (50, 51) from an adjacent transport vehicle (52) onto a container transporter (1) according to one of the preceding claims, wherein
- the transfer roller (6) is laterally deployed from the container transporter (1) until it contacts the bottom side of the cargo item on the transport vehicle (52) or at least one dolly roller (56) in the loading surface (53) of the transport vehicle (52), wherein
- a drive direction of the transfer roller (6) is selected in particular automatically selected as a function of the transfer roller (6) directly contacting the bottom side of the cargo item (50, 51) or one of the dolly rollers (56), and
- rotating the transfer roller (6) sets the cargo item in motion and moves it onto the container transporter (1).

12. The method according to claim 11, wherein it is automatically detected in the contacting condition as a function of an elevation reached by the transfer roller (6) whether the transfer roller (6) contacts a dolly roller (56) or the bottom side of the cargo item (50, 51).

## Revendications

1. Transporteur de conteneur (1), comprenant :
- une paroi latérale (1 a) s'étendant dans la direction longitudinale (10) du transporteur de conteneur (1),
- des rouleaux de transport entraînés ne transportant que dans la direction longitudinale (10) et qui font saillie vers le haut d'une surface de chargement (3) du transporteur de conteneur (1) et
- un dispositif récepteur (4) pour recevoir des marchandises (50, 51) à charger se trouvant sur une surface de chargement (53) - pourvue de rouleaux Dolly - d'un véhicule de transport (52) ou « Dollys » plus ou moins à la même hauteur, en particulier un conteneur (50), dans lequel :
- le dispositif récepteur (4) comprend un bras de réception (9, 9'), une commande de réception et au moins un rouleau de réception pivotant et déployable (6) qui peut être entraîné par la commande de réception de la zone de la surface de chargement (3) du transporteur de conteneur (1) dans une position activée,
- dans lequel le dispositif récepteur (4) est conçu de manière que le rouleau de réception (6) soit entraîné en rotation dans la direction de réception souhaitée (33) pour les marchandises (50, 51) à charger ou à l'encontre de la direction de réception souhaitée (33) pour les marchandises (50, 51) à charger selon que le rouleau de réception (6) en position activée s'accroche directement au fond des marchandises (50, 51) à charger ou à l'un des rouleaux Dolly (56).

2. Transport de conteneur (1) selon la revendication 1, dans lequel le bras de réception (9') est télescopable.

3. Transporteur de conteneur (1) selon la revendication 1, dans lequel le rouleau de réception (6) peut être soumis à pivotement et être déployé à l'aide d'une tringlerie à levier (12, 28).

4. Transporteur de conteneur (1) selon l'une quelconque des revendications précédentes, dans lequel le rouleau de réception (6) peut être commandé par la commande de réception directement ou via des éléments intermédiaires, en particulier une roue intermédiaire.

5. Transporteur de conteneur (1) selon l'une quelconque des revendications précédentes, dans lequel le dispositif récepteur (4) présente dans la direction de réception (33) des marchandises à charger plusieurs rouleaux de réception (6) se trouvant l'un derrière l'autre, qui sont aménagés pour venir en prise respectivement avec un rouleau Dolly (56), mais en particulier en conservant un intervalle mutuel plus ou moins grand que celui des rouleaux Dolly et, par suite, un centrage s'opère dans la direction de réception (33) sur une paire de rouleaux Dolly (56).

6. Transporteur de conteneur (1) selon l'une quelconque des revendications précédentes, dans lequel le dispositif récepteur (4) présente deux bras de réception (9) distants transversalement par rapport au dispositif récepteur (33) avec respectivement au moins un rouleau de réception (6).

7. Transporteur de conteneur (1) selon l'une quelconque des revendications précédentes, dans lequel le dispositif récepteur (4) comprend un dispositif de surveillance qui affiche l'application du rouleau de réception (6) sur le rouleau Dolly (56) ou sur le fond du conteneur (50).

8. Transporteur de conteneur (1) selon l'une quelconque des revendications précédentes, dans lequel, dans les surfaces latérales du transporteur de conteneur (1) qui ne sont pas couvertes par la paroi latérale (1a), se trouvent des éléments de contact opérant d'un seul tenant, en particulier des éléments de contact (25) autocentrés et/ou déployables transversalement à la direction de transport pour coopérer d'un seul tenant avec le véhicule de transport (52) avec lequel ils vont venir en contact.

9. Transporteur de conteneur (1) selon l'une quelconque des revendications précédentes, dans lequel le transporteur de conteneur (1) présente plusieurs éléments de contact réglés sur différentes structures de véhicules de transport (52) et, en particulier, le transporteur de conteneur (1) comprend au moins un élément d'affichage qui affiche l'application et donc le positionnement correct du véhicule de transport (52) sur l'élément de contact correspondant.

10. Transporteur de conteneur (1) selon l'une quelconque des revendications précédentes, dans lequel le dispositif récepteur (4) est conçu de manière à reconnaître automatiquement, indépendamment de la hauteur atteinte par le rouleau de réception (6) dans la position activée, si le rouleau de réception (6) vient en contact avec un rouleau Dolly (56) ou avec le fond d'une marchandise (50, 51) à charger.

11. Procédé d'entassement automatique d'une marchandise (50, 51) à charger provenant d'un véhicule de transport voisin (52) sur un transporteur de conteneur (1) selon l'une quelconque des revendications précédentes, dans lequel :
- le rouleau de réception (6) est acheminé latéralement du transporteur de conteneur (1) jusqu'à ce qu'il vienne en contact avec le fond de la marchandise (50, 51) à charger sur le véhicule de transport (52) ou au moins un rouleau Dolly (56) dans la surface de chargement (53) du véhicule de transport (52),
- indépendamment du fait que le rouleau de réception (6) vienne en contact direct avec le fond de la marchandise (50, 51) à charger ou avec l'un des rouleaux Dolly (56), le sens d'entraînement du rouleau de réception (6) est choisi, en particulier choisi automatiquement et,
- la marchandise à charger est mise en mouvement par la rotation du rouleau de réception (6) et est déplacée sur le transporteur de conteneur (1).

12. Procédé selon la revendication 11, dans lequel :
indépendamment de la hauteur atteinte du rouleau de réception (6), dans la situation de contact, on détecte automatiquement si le rouleau de réception (6) vient en contact avec un rouleau Dolly (56) ou avec le fin d'une marchandise (50, 51) à charger.
